# EUROPÄISCHE PATENTSCHRIFT

(11) **EP 0 719 296 B1**
(45) Veröffentlichungstag und Bekanntmachung des Hinweises auf die Patenterteilung: **06.10.1999**
(21) Anmeldenummer: 95926955.6
(22) Anmeldetag: 19.07.1995
(51) Int. Cl.: C08J 5/04, C08J 9/00, B60R 13/02, C08L 75/04

(54) **VERFAHREN ZUR HERSTELLUNG VON INNENAUSSTATTUNGSTEILEN FÜR VERKEHRSMITTEL UND IN DIESEM VERFAHREN HERGESTELLTES INNENAUSSTATTUNGSTEIL**
PROCESS FOR PRODUCING INTERIOR TRIMS FOR TRANSPORT MEANS AND INTERIOR TRIMS THUS PRODUCED
PROCEDE DE FABRICATION DE GARNITURES INTERIEURES DE MOYENS DE TRANSPORT ET GARNITURES INTERIEURES AINSI PRODUITES

(30) Priorität: 19.07.1994 DE 4425447; 18.08.1994 DE 4429355
(43) Veröffentlichungstag der Anmeldung: 03.07.1996
(73) Patentinhaber: ELDRA KUNSTSTOFFTECHNIK GMBH, D-84137 Vilsbiburg (DE)
(72) Erfinder: GELTINGER, Hubert, D-84137 Vilsbiburg (DE); REICHARD, Markus, D-84144 Geisenhausen (DE)
(74) Vertreter: Kohlmann, Karl Friedrich, Dipl.-Ing.
(86) Internationale Anmeldenummer: EP9502843
(87) Internationale Veröffentlichungsnummer: WO9602589

(56) Entgegenhaltungen:
- EP-A- 0 320 042
- EP-A- 0 518 338
- DE-A- 3 521 828
- FR-A- 2 683 763
- GB-A- 1 206 593
- US-A- 3 691 569
- DATABASE WPI Derwent Publications Ltd., London, GB; AN 92-027396[04] & JP,A,3 272 836 (ACHILLES CORP. ET AL) 4. Dezember 1991
- DATABASE WPI Derwent Publications Ltd., London, GB; AN 80-91360C[51] & JP,A,55 142 630 (KURABO IND. KOGYO KK) 8. November 1980

## Beschreibung

### Technisches Gebiet

Die Erfindung bezieht sich auf ein Verfahren zur Herstellung von Innenausstattungsteilen für Verkehrsmittel, insbesondere Kraftfahrzeuge gemäß dem Oberbegriff des Anspruchs 1. Des weiteren betrifft die Erfindung ein Innenausstattungsteil gemäß dem Oberbegriff des Anspruchs 11.

### Stand der Technik

Innenausstattungsteile von Verkehrsmitteln, insbesondere Kraftfahrzeugen, müssen in der Regel, d.h. abgesehen von kaum oder gar nicht mit dem Benutzer oder Ladegut des Verkehrsmittels in Berührung kommenden Teilen, wie beispielsweise der Dachhimmel, eine gewisse Mindestfestigkeit gegenüber mechanischer Beanspruchung, d.h. z.B. eine bestimmte Biege- und Zugfestigkeit, aufweisen. Zugleich ist aber für alle Innenausstattungsteile auch eine gewisse Formhaltigkeit gegenüber natürlichen Einflüssen, wie Temperatur und Temperaturwechsel, z.B. eine innerhalb bestimmter Grenzen vorgegebene thermische Längenausdehnung, oder eine begrenzte Feuchtigkeitsaufnahme und dergleichen mehr erforderlich. Neben der Erfüllung solcher mechanischer Festigkeitsanforderungen wird an die Gestaltung von Innenausstattungsteilen von Verkehrsmitteln, insbesondere Kraftfahrzeugen, aber auch die Anforderung eines möglichst geringen Gewichtes sowie der unmittelbaren Befestigung von bzw. der unmittelbaren Verbindung mit die Sichtseite des Innenausstattungsteiles bildenden Dekormaterialien, wie Folien aus ABS, ASA, TPO, PVC, PE, PP oder PUR oder aber natürlichen Dekormaterialien wie Leder, Stoff, Velours oder Teppich gestellt. Schließlich sollen Innenverkleidungsteile von Verkehrsmitteln auch noch ein Mindestmaß an schalldämmenden Eigenschaften besitzen und zu alledem auch noch mit einem geringstmöglichen Aufwand in recyclingfreundlicher Weise herstellbar sein. Um eine größtmögliche Anzahl dieser an die Innenausstattungsteile, insbesondere von Kraftfahrzeugen, gestellten Anforderungen zu erfüllen, wurden diese bisher aus einer Trägerplatte aus einem handelsüblichen sowie geschäumten PUR-Gemisch und einem mit diesem verbundenen bzw. verklebten Dekormaterial hergestellt, in der Weise, daß in die Schäumform zunächst das Dekormaterial eingelegt und anschließend das aus handelsüblichem Material bestehende schäumbare PUR-Gemisch eingebracht wurde, wobei es angesichts der beim Aufschäumen auftretenden Reaktionsdrücke erforderlich war, zumindest Nahtstellen des Dekormaterials mit einer besonderen Folie abzudecken, um ein Durchtreten der Aufschäumung zur Sichtseite des Innenausstattungsteiles hin zu unterbinden. Sofern es aus Festigkeitsgründen weiterhin erforderlich war, die Trägerplatte besonders zu verstärken, wurden die als Füll- oder Verstärkungsmaterial bekannten und bewährten Materialien, wie Mineral- oder Kunststoffasern eingesetzt, wobei die Mineral- oder Kunststoffasern meist in Form eines Vlieses, gelegentlich auch in Form von Strängen in die Schäumform eingelegt wurden, bevor das schäumbare Material eingebracht wurde.

Die Verwendung von Kunststoff- oder Mineralfasern, wie auch die Verwendung von Mineralmaterial überhaupt, als Füllstoff oder Verstärkungsmaterial ist zum einen aufwendig und zum anderen wenig recycling- bzw. abfallbeseitigungsfreundlich sowie schließlich auch mit einem sehr hohen Gewichtsanteil behaftet. Insbesondere bedingt die Verwendung eines aus mineralischem Fasermaterial bestehenden Verstärkungsmaterials auf der einen Seite eine Belastung des Arbeitsbereiches, insbesondere der Gesundheit der mit der Herstellung der Innenverkleidungsteile befaßten Arbeiter und führt auf der anderen Seite, z.B. bei einer Verbrennung von Abfall, zu einem erhöhten Anfall von unerwünschter und nicht verwertbarer Schlacke. Hier ist vor allem auch in Betracht zu ziehen, daß im Rahmen einer Abfallverbrennung auch ein gewisser Anteil an Heizmaterial erforderlich ist, der bisher durch Zuführung von Erdöl bzw. Heizöl gestellt werden muß.

Aus der GB-A-1 206 593 ist ein Innenausstattungsteil für Kraftfahrzeuge bekannt, bei dem eine geformte Schicht aus zellenartigem, synthetischem Material eine Gewebeverstärkung, wie beispielsweise Jutefasern, enthält. Eine Seite des zellenartigen, synthetischen Materials ist mit einem dekorativen Überzug versehen.

Die EP-A-0 320 042 offenbart ein Verfahren zur Herstellung von geformten Produkten, nämlich härtbaren, mit natürlichen Fasern verstärkten Kunststoffplatten. Bei den natürlichen Fasern kann es sich um Jute, Hanf oder Ramie handeln. Die Fasern werden speziell imprägniert und in einer Form erhöhter Temperatur und Druck ausgesetzt. Die Imprägnierung erfolgt durch härtbares Polyurethanmaterial.

Aus Database WPI, Derwent Publications Ltd., London, GB: AN 92-027396[04] ist ein Laminat bekannt, das dann teilweise aus Papier besteht, wenn dieser Teil eine Bienenwabenstruktur aufweist.

Aus Database WPI, Derwent Publications Ltd., London, GB: AN 80-91360C[51], ist eine Schichtstruktur für die Herstellung beispielsweise eines Innenausstattungsteils für ein Kraftfahrzeug bekannt, bei dem ein Teil der Struktur organische Fasern beinhaltet, wie beispielsweise Zellulose.

### Darstellung der Erfindung

Der Erfindung liegt das technische Problem zugrunde, ein Verfahren zur Herstellung eines Innenverkleidungsteils für Verkehrsmittel, insbesondere Kraftfahrzeuge, sowie ein Innenverkleidungsteil zu schaffen, welches zwar einerseits die Erfüllung aller an ein Innenausstattungsteil zu stellenden mechanischen Festigkeitsanforderungen sowie die Anforderungen an die Temperaturunabhängigkeit erlaubt, andererseits aber zugleich auch eine Verringerung der Herstellungskosten bei gleichzeitiger Verbesserung der Recyclingfreundlichkeit sowie einem geringstmöglichen Gesamtgewicht gewährleistet. Ein wesentlicher Teil der gestellten Aufgabe besteht dabei zugleich darin, einerseits die Arbeitsbedingungen für die mit der Herstellung der Innenausstattungsteile befaßten Arbeiter und andererseits die Recyclingbedingungen bzw. überhaupt die Abfallbeseitigungsbedingungen, insbesondere der Abfallverbrennung, zu verbessern.

Dieses technische Problem wird erfindungsgemäß durch ein Verfahren mit den Merkmalen des Anspruchs 1 bzw. durch ein Innenverkleidungsteil mit den Merkmalen des Anspruchs 11 gelöst.

Die Verwendung eines natürlichen Fasermaterials als Verstärkungsmaterial bzw. Füllstoff für ein aus natürlichen oder recycelten Polyolen sowie einem Gemischanteil aus Isocyanaten bestehenden und geschäumtem Kunststoffanteil herzustellende Innenausstattungsteile für Verkehrsmittel, insbesondere Kraftfahrzeuge, ermöglicht unbeschadet der Erreichung der erforderlichen mechanischen und thermischen Eigenschaften des Innenverkleidungsteiles einerseits neben einer Senkung des Herstellungsaufwandes, da hierfür weitgehend recyceltes Material eingesetzt werden kann, andererseits eine erhebliche Verringerung des Gewichtes des Innenverkleidungsteiles. Zusätzlich zu diesen Vorteilen gesellt sich auch noch der Effekt, daß aus natürlichem Fasermaterial bestehendes Verstärkungsmaterial bzw. Füllstoffmaterial zu einer allen auftretenden Anforderungen bezüglich der Temperaturbeständigkeit bzw. begrenzten Wärmeausdehnung des Innenverkleidungsteiles in optimaler Weise genügenden Problemlösung führt. Ein ganz besonderer Vorteil der Verwendung natürlichen Fasermaterials ist ferner darin zu sehen, daß die mit der Verwendung z.B. von Glasfaser verbundene gesundheitliche Belastung der Arbeiter beseitigt ist. Darüber hinaus wird schließlich noch eine entscheidende Verbesserung der Abfallbeseitigung, insbesondere Müllverbrennung, dadurch erreicht, daß im erfindungsgemäßen Verfahren hergestellte Innenverkleidungsteile nicht nur praktisch schadstoffrei verbrannt werden können, sondern im Rahmen der Müllverbrennung zugleich auch als Heizmaterial dienen und somit den bisher erforderlichen zusätzlichen Einsatz von Erdöl bzw. Heizöl überflüssig machen.

Selbstverständlich kann im Rahmen der Erfindung auch die Verwendung von handelsüblichem PUR-Gemisch vorgesehen werden, falls natürliche oder recycelte Polyole, beispielsweise infolge unzureichender Recyclingkapazitäten, nicht in ausreichender Menge zur Verfügung stehen.

In Ausführung des erfindungsgemäßen Verfahrens ist vorgesehen, daß das aus natürlichen Fasern bestehende Material in eine der Raumform des herzustellenden Innenausstattungsteiles entsprechend gestaltete sowie beheizbare (Schäum-)Form eingelegt und anschließend ein reaktionsfähiges, schäumbares Gemisch aus natürlichen oder recycelten Polyolen und Isocyanaten bzw. einer Zubereitung aus Polyäther- und/oder Polyesterpolyolen und höherwertigen aromatischen oder aliphatischen Isocyanaten mit einem Dosierdruck von 100 (10⁷ Pa) bis zu 300 bar (3·10⁷ Pa) gemischt und nachfolgend in die (Schäum-)Form eingebracht sowie in der (Schäum-)Form bei einem Reaktionsdruck zwischen 3 (3·10⁵ Pa) und 300 bar (3·10⁷ Pa) aufgeschäumt und ausgehärtet wird, wobei das Verhältnis von Verstärkungseinlage zu Polyol- und Isocyanat-Gemisch bzw. der Zubereitung aus Polyäther- und/oder Polyesterpolyolen und höherwertigen aromatischen oder aliphatischen Isocyanaten zweckmäßigerweise in einem Bereich von 10 zu 90 % bis 90 zu 10 % liegt und wobei sich ferner das Mischungsverhältnis von natürlichen oder recycelten Polyolen zu Isocyanaten in einem Verhältnisbereich zwischen 100 : 40 bis 100 : 200 bewegt.

Vorteilhafterweise wird das aus natürlichem Fasermaterial bestehende Material der Verstärkungseinlage in einem dem Einlegen in die Schäumform vorausgehenden Verfahrensschritt einem Trocknungsprozeß unterworfen, wobei der Trocknungsprozeß entweder dem Einlegen in die Schäumform unmittelbar vorausgehend ausgeführt wird oder Maßnahmen angewendet werden, welche nach dem Trocknungsprozeß eine erneute Wasseraufnahme durch das Verstärkungsmaterial ausschließen.

Für die Verstärkungseinlage kann als völliger oder teilweiser Ersatz für Neumaterial auch recyceltes Material, wie in geeigneter Weise zerkleinertes Altpapier, gebrauchtes und gereinigtes Gewebe und dergleichen verwendet werden.

Für die Verstärkungseinlage werden als natürliches langfaseriges Material bevorzugterweise Jute-, Flachs-, Kokos-, Bananen-, Baumwolle-, Sisal-, Hanf-, oder Ramiefasern sowie Stroh verwendet, wobei dieses natürliche langfaserige Material oder natürliches langfaseriges Material überhaupt aus rezyklierten Gewebefetzen oder dergleichen gewonnen werden kann.

Als natürliches kurzfaseriges Material für die Verstärkungseinlage werden Papierschnitzel verwendet, die bevorzugterweise als Altpapier oder aus industriellen Papierabfällen gewonnen werden.

Darüber hinaus eröffnet das erfindungsgemäße Verfahren dem Anwender auch eine weitreichende Gestaltungs- bzw. Anpassungsfreiheit an vorzugebende Anforderungen bezüglich der mechanischen oder thermischen Eigenschaften eines herzustellenden Innenverkleidungsteiles. Hierzu gehört nicht nur die Möglichkeit, das Verhältnis von Verstärkungs- oder Füllmaterial zu PUR-Gemisch innerhalb einer Grenze von 90 zu 10 % variieren zu können, sondern in Verbindung damit auch eine Vielfalt von Anordnungsmöglichkeiten der Verstärkungseinlage innerhalb des Innenverkleidungsteiles. So kann in einer ersten Verwirklichungsform vorgesehen sein, daß aus natürlichen Fasern, insbesondere Schnitzel oder Langfasern bestehendes, die Verstärkungseinlage bildendes Material ungerichtet, wirr, geformt oder vorgeformt in die (Schäum-)Form eingelegt wird.

Gemäß einer anderen Verwirklichungsform des erfindungsgemäßen Verfahrens kann aber auch vorgesehen sein, daß das aus natürlichen Fasern bestehende, die Verstärkungseinlage bildende Material mindestens teilweise gerichtet, z.B. als Vlies, Gewebe oder Gewirke in die (Schäum-)Form eingelegt wird.

Ferner kann nach einer besonderen Verwirklichungsform des erfindungsgemäßen Verfahrens aber auch vorgesehen sein, daß das aus natürlichen Fasern bestehende, die Verstärkungseinlage bildende Material schichtenweise übereinanderliegend und abwechselnd in Form wirrer Verstärkungseinlagen und gerichteter Verstärkungseinlagen in die (Schäum-)Form eingelegt wird.

Unbeschadet der Anwendung einer der vorgenannten Verfahrensweisen kann, zur Herstellung eines einer besonderen Anwendung optimal angepaßten Innenausstattungsteiles, aber auch vorgesehen sein, daß zusätzlich zu einer aus wirr eingelegtem natürlichem verhältnismäßig kurzfaserigem Fasermaterial bestehenden Verstärkungseinlage in der Hauptbelastungsrichtung des Innenausstattungsteiles ausgerichtet eine aus gerichtetem langfaserigem Fasermaterial bestehende Verstärkungseinlage in die (Schäum-)Form eingelegt wird.

Um ein Innenausstattungsteil in einem Verfahrensgang gebrauchsfertig herzustellen, wird, für den Fall, daß die Sichtseite des Innenausstattungsteils durch eine Kunststoffolie gebildet sein soll, vorgeschlagen, daß dem Einlegen der Verstärkungseinlage vorausgehend ein die Sichtseite des Innenausstattungsteiles bildendes Dekormaterial aus ABS, ASA, TPO, PVC, PE, PP oder PUR eingebracht wird.

Entsprechend wird für den Fall, daß für die Sichtseite des Innenausstattungsteiles ein Bezug aus einem natürlichen Werkstoff vorgesehen ist, vorgeschlagen, daß dem Einlegen der Verstärkungseinlage vorausgehend ein die Sichtseite des Innenausstattungsteils bildendes Dekormaterial aus Leder, Stoff, Velours oder Teppich eingebracht wird.

Ein im vorausgehend beschriebenen Verfahren hergestelltes Innenausstattungsteil für Verkehrsmittel, insbesondere Kraftfahrzeuge, welches aus einem tragenden, formerhaltenden Teil und einem die Sichtseite des Innenausstattungsteiles bildenden Dekorteil gebildet ist, wobei das tragende formerhaltende Teil aus einem Kunststoffmaterial aus natürlichen oder recycelten Polyolen und Isocyanaten bzw. einer Zubereitung aus Polyäther- und/oder Polyesterpolyolen und höherwertigen aromatischen oder aliphatischen Isocyanaten besteht, das mittels einer Verstärkungseinlage aus natürlichen Fasern versteift ist, wobei der Anteil von Verstärkungsmaterial zwischen 10% und 90% beträgt, ist dadurch gekennzeichnet, daß die Verstärkungseinlage aus Papierschnitzeln besteht.

Weitere Kennzeichnungsmerkmale eines erfindungsgemäßen Innenverkleidungsteiles ergeben sich aus den vorstehend geschilderten Materialverwendungen.

## Patentansprüche

1. Verfahren zur Herstellung von Innenausstattungsteilen für Verkehrsmittel, insbesondere Kraftfahrzeuge, die aus
- einem tragenden, formerhaltenden Teil und
- einem die Sichtseite des Innenausstattungsteils bildenden Dekorteil bestehen,
wobei für das tragende, formerhaltende Teil ein Kunststoffmaterial
- in Form einer Zubereitung aus Polyäther- und/oder Polyesterpolyolen und mehrwertigen aromatischen oder aliphatischen Isocyanaten bzw.
- in Form einer Zubereitung aus natürlichen oder aus einem Recycling erhaltenen Polyolen und Isocyanaten verwendet wird,
- das mittels Verstärkungseinlagen aus einem aus natürlichen Fasern bestehenden Material versteift wird, wobei für die Verstärkungseinlagen ein kurzfaseriges Material in Gestalt von Papierschnitzeln verwendet wird, die wirr in eine Form eingebracht werden.

2. Verfahren nach Anspruch 1,
**dadurch gekennzeichnet, daß**
die Papierschnitzel aus Recyclingpapier bestehen.

3. Verfahren nach Anspruch 1 oder 2,
**dadurch gekennzeichnet, daß**
zusätzlich zu den wirr eingebrachten Papierschnitzeln eine aus gerichtetem natürlichen langfaserigen Fasermaterial bestehende Verstärkungseinlage, in der Hauptbelastungsrichtung des Innenausstattungsteiles ausgerichtet, in die Form eingebracht wird.

4. Verfahren nach Anspruch 3,
**dadurch gekennzeichnet, daß**
als natürliches langfaseriges Material für die zusätzliche Verstärkungseinlage Jute-, Flachs-, Kokos-, Bananen-, Baumwolle-, Sisal-, Hanf-, Ramiefasern oder Stroh verwendet wird.

5. Verfahren nach einem der Ansprüche 1 bis 4,
**dadurch gekennzeichnet, daß**
nach dem Einbringen der Verstärkungseinlagen in die entsprechend der Raumform des herzustellenden Innenausstattungsteils gestaltete und beheizbare Form anschließend die reaktionsfähige, schäumbare Zubereitung aus natürlichen oder aus einem Recycling erhaltenen Polyolen und Isocyanaten bzw. die Zubereitung aus Polyäther- und/oder Polyesterpolyolen und mehrwertigen aromatischen oder aliphatischen Isocyanaten mit einem Dosierdruck von 100 bar (10⁷ Pa) bis zu 300 bar (3 x 10⁷ Pa) gemischt und in die Form eingebracht sowie in der Form bei einem Reaktionsdruck zwischen 3 bar (3 x 10⁵ Pa) und 300 bar (3 x 10⁷ Pa) aufgeschäumt und ausgehärtet wird.

6. Verfahren nach einem der Ansprüche 1 bis 5,
**dadurch gekennzeichnet, daß**
sich das Mischungsverhältnis zwischen Kunststoffmaterial und Verstärkungseinlage in einem Bereich von 10 % zu 90 % bis 90% zu 10 % bewegt.

7. Verfahren nach einem der Ansprüche 1 bis 6,
**dadurch gekennzeichnet, daß**
sich das Mischungsverhältnis von natürlichen oder aus einem Recycling erhaltenen Polyolen zu Isocyanaten bzw. von Polyäther- und/oder Polyesterpolyolen zu mehrwertigen aromatischen oder aliphatischen Isocyanaten in einem Verhältnisbereich von 100 : 40 bis 100 : 200 bewegt.

8. Verfahren nach einem der Ansprüche 1 bis 7,
**dadurch gekennzeichnet, daß**
das aus natürlichen Fasern bestehende Material der Verstärkungseinlage in einem dem Einbringen in die Form vorausgehenden Verfahrensgang getrocknet wird.

9. Verfahren nach einem der Ansprüche 1 bis 8,
**dadurch gekennzeichnet, daß**
dem Einbringen der Verstärkungseinlage vorausgehend das die Sichtseite des Innenausstattungsteiles bildende Dekorteil eingebracht wird, das aus ABS, ASA, TPO, PVC, PE, PP oder PUR besteht.

10. Verfahren nach einem der Ansprüche 1 bis 8,
**dadurch gekennzeichnet, daß**
dem Einbringen der Verstärkungseinlage vorausgehend das die Sichtseite des Innenausstattungsteils bildende Dekorteil eingebracht wird, das aus Leder, Stoff, Velours oder Teppich besteht.

11. Innenausstattungsteil für Verkehrsmittel, insbesondere Kraftfahrzeuge, das aus einem tragenden, formerhaltenden Teil und einem die Sichtseite des Innenausstattungsteils bildenden Dekorteil gebildet ist, wobei das tragende formerhaltende Teil aus einem Kunststoffmaterial aus natürlichen oder aus einem Recycling erhaltenen Polyolen und Isocyanaten besteht, das mittels einer Verstärkungseinlage aus wirr vorliegenden Papierschnitzeln versteift ist.

12. Innenausstattungsteil nach Anspruch 11,
**dadurch gekennzeichnet, daß**
die Papierschnitzel aus Recyclingpapier bestehen.

13. Innenausstattungsteil nach Anspruch 11,
dadurch gekennzeichnet, dass
der Anteil der Verstärkungseinlage zwischen 10 % und 90 % beträgt.

## Claims

1. Process for producing interior fitting parts for means of transport, in particular motor vehicles, which comprise
- a supporting, shape-retaining part and
- a decorative part forming the visible side of the interior fitting part,
wherein a plastic material
- in the form of a formulation of polyether and/or polyester polyols and multivalent aromatic or aliphatic isocyanates or
- in the form of a formulation of natural polyols or those obtained from recycling and isocyanates, is used for the supporting, shape-retaining part,
- and is stiffened by means of reinforcing inserts made from material consisting of natural fibres, wherein a short-fibre material in the form of paper shreds,
which are introduced randomly into a mould, is used for the reinforcing inserts.

2. Process according to claim 1, characterised in that the paper shreds consist of recycled paper.

3. Process according to claim 1 or 2, characterised in that in addition to the paper shreds introduced randomly, a reinforcing insert consisting of aligned natural long-fibre fibrous material, aligned in the main stress direction of the interior fitting part, is introduced into the mould.

4. Process according to claim 3, characterised in that jute, flax, coir, banana, cotton, sisal, hemp, ramie fibres or straw is used as the natural long-fibre material for the additional reinforcing insert.

5. Process according to one of claims 1 to 4,
characterised in that, after introducing the reinforcing inserts into the mould which can be heated and is shaped according to the spatial shape of the interior fitting part to be produced, the reactive, foamable formulation of natural polyols or those obtained from recycling and isocyanates or the formulation of polyether and/or polyester polyols and multivalent aromatic or aliphatic isocyanates having a metering pressure of 100 bar (10⁷ Pa) up to 300 bar (3 x 10⁷ Pa) is then mixed and introduced into the mould, and foamed and cured in the mould at a reaction pressure between 3 bar (3 x 10⁵ Pa) and 300 bar (3 x 10⁷ Pa).

6. Process according to one of claims 1 to 5,
characterised in that the mixing ratio between plastic material and reinforcing insert moves in a range from 10 % to 90 % to 90 % to 10 %.

7. Process according to one of claims 1 to 6,
characterised in that the mixing ratio of natural polyols or those obtained from recycling to isocyanates or of polyether and/or polyester polyols to multivalent aromatic or aliphatic isocyanates moves in a ratio range from 100:40 to 100:200.

8. Process according to one of claims 1 to 7,
characterised in that the material of the reinforcing insert consisting of natural fibres is dried in a process step preceding introduction into the mould.

9. Process according to one of claims 1 to 8,
characterised in that the decorative part forming the visible side of the interior fitting part and which consists of ABS, ASA, TPO, PVC, PE, PP or PUR, is introduced before introduction of the reinforcing insert.

10. Process according to one of claims 1 to 8,
characterised in that the decorative part forming the visible side of the interior fitting part and which consists of leather, fabric, velour or carpet, is introduced before introduction of the reinforcing insert.

11. Interior fitting part for means of transport, in particular motor vehicles, which is formed from a supporting, shape-retaining part and a decorative part forming the visible side of the interior fitting part, wherein the supporting, shape-retaining part consists of a plastic material of natural polyols or those obtained from recycling and isocyanates, and is stiffened by means of a reinforcing insert of randomly present paper shreds.

12. Interior fitting part according to claim 11,
characterised in that the paper shreds consist of recycled paper.

13. Interior fitting part according to claim 11,
characterised in that the proportion of reinforcing insert is between 10 % and 90 %.

## Revendications

1. Procédé de fabrication de parties de garniture intérieures pour des moyens de transport, en particulier des véhicules automobiles, constituées
- d'une partie à maintien de forme, porteuse, et
- d'une partie de décoration constituant la face visible de la partie des garnissages intérieurs,
pour la partie maintien de forme étant utilisée une matière synthétique se présentant
- sous la forme d'une préparation constituée de polyols de polyéther et/ou de polyester et d'isocyanates aromatiques ou aliphatiques polyvalents, et/ou
- sous la forme d'une préparation constituée de polyols et d'isocyanates, naturels ou obtenus par recyclage,
- rigidifiés au moyen d'inserts de renforcement constitués d'un matériau composé de fibres naturelles, pour les inserts de renforcement étant utilisé un matériau à fibres courtes se présentant sous la forme de déchets de papier, introduits de façon embrouillée dans un moule.

2. Procédé selon la revendication 1,
caractérisé en ce que les déchets de papier sont constitués de papier de recyclage.

3. Procédé selon la revendication 1 ou 2,
caractérisé en ce que, en plus des déchets de papier introduits de façon embrouillée, on introduit dans le moule un garnissage de renforcement constitué de matériau fibreux, à fibres longues, naturel, orienté, l'orientation étant dans la direction de sollicitation principale de la partie de garniture intérieure.

4. Procédé selon la revendication 3,
caractérisé en ce que l'on utilise comme matériau à fibres longues, naturel pour le garnissage de renforcement supplémentaire des fibres de jute, lin, coco, banane, coton, sisal, chanvre, ramie ou paille.

5. Procédé selon l'une des revendications 1 à 4,
caractérisé en ce que, après l'introduction des garnissages de renforcement dans le moule, pouvant être chauffé et configuré de manière correspondante à la forme spatiale de la pièce de garniture intérieure à fabriquer, la préparation moussable apte à la réaction, constituée de polyols et d'isocyanates d'origine naturelle ou obtenus par recyclage et/ou la préparation constituée de polyols de polyéther et/ou de polyester et d'isocyanates polyvalents aromatiques ou aliphatiques est ensuite mélangée sous une pression de dosage de 100 bars (10⁷ Pa) jusqu'à 300 bars (3 x 10⁷ Pa) et introduite dans le moule, ainsi que moussée et durcie dans le moule, à une pression de réaction comprise entre 3 bars (3 x 10⁵ Pa) et 300 bars (3 x 10⁷ Pa).

6. Procédé selon l'une des revendications 1 à 5,
caractérisé en ce que le rapport de mélange entre le matériau synthétique et le garnissage de renforcement se déplace dans une plage allant de 10 % à 90 % jusqu'à de 90 % à 10 %.

7. Procédé selon l'une des revendications 1 à 6,
caractérisé en ce que le rapport de mélange entre les polyols naturels ou issus de recyclage et les isocyanates et/ou les polyols de polyéther et/ou de polyester vis-à-vis des isocyanates polyvalents aromatiques ou aliphatiques se déplace dans un rapport de mélange allant de 100 : 40 à 100 : 200.

8. Procédé selon l'une des revendications 1 à 7,
caractérisé en ce que le matériau constitué de fibres naturelles du garnissage de renforcement est séché dans une phase du processus précédant l'introduction dans le moule.

9. Procédé selon l'une des revendications 1 à 8,
caractérisé en ce que la partie de décoration constituant la face visible de la partie de garniture intérieure, constituée de ABS, ASA, TPO, PVC, PE, PP ou PUR, est introduite avant l'introduction du garnissage de renforcement.

10. Procédé selon l'une des revendications 1 à 8,
caractérisé en ce que la partie de décoration, constituant la face visible de la partie de garniture intérieure, qui est constituée de cuir, étoffe, velours ou tapis-moquette, est introduite préalablement à l'introduction du garnissage de renforcement.

11. Partie de garniture intérieure pour des moyens de circulation, en particulier des véhicules automobiles, qui est constituée d'une partie à maintien de forme, porteuse, et d'une partie de décoration constituant la face visible de la partie des garnissages intérieurs, la partie à maintien de forme, porteuse, étant constituée d'un matériau synthétique composé de polyols et d'isocyanates, naturels ou venant de recyclage, qui est rigidifié au moyen d'un garnissage de renforcement constitué de déchets de papier se présentant de façon embrouillée.

12. Partie de garniture intérieure selon la revendication 11, caractérisée en ce que les déchets de papier sont constitués de papier de recyclage,

13. Parte de garniture intérieure selon la revendication 11, caractérisée en ce que la proportion de garnissage de renforcement est comprise entre 10 % et 90 %.
